# FASCICULE DE BREVET EUROPEEN

(11) **EP 2 232 970 B1**
(45) Date de publication et mention de la délivrance du brevet: **29.02.2012**
(21) Numéro de dépôt: 10157548.8
(22) Date de dépôt: 24.03.2010
(51) Int. Cl.: A01B 15/16

(54) **Disque de labour et engin de labour comportant au moins un train équipé d'au moins un tel disque**
Pflugscheibe und Pfluggerät, das mindestens eine Achse mit mindestens einer solchen Scheibe umfasst
Plough disc and ploughing machine including at least one axle system provided with at least one such disc

(30) Priorité: 25.03.2009 FR 0901415; 17.08.2009 FR 0955686
(43) Date de publication de la demande: 29.09.2010
(73) Titulaire: Javerlhac, Jean-Charles, 16300 Guimps (FR)
(72) Inventeur: Javerlhac, Jean-Charles, 16300 Guimps (FR)
(74) Mandataire: Leszczynski, André

(56) Documents cités:
- EP-B1- 0 470 990
- DE-A1- 3 723 141
- US-A- 323 343
- US-A- 4 099 576
- US-A- 4 538 688
- US-E- R E22 924

## Description

La présente invention concerne les disques de labour destinés à être montés avec plusieurs autres disques identiques ou différents librement en rotation autour d'un axe solidaire d'un châssis d'un engin de labour, notamment une charrue. L'axe peut être incliné par rapport à la direction de déplacement de l'engin de manière à imprimer un mouvement de rotation aux disques, ou encore être perpendiculaire à la direction de déplacement de l'engin.

De tels disques présentent généralement une forme de calotte sphérique réalisée en acier centrée sur leur axe de rotation. Ils forment une cuvette au fond de laquelle se trouve leur moyeu et provoque de ce fait un retournement partiel de la terre lors du labour.

On connaît de tels disques par les demandes de brevets EP 0 470 990, EP 0 893 043 et EP 1 203 523.

On connaît par le brevet US 2 034 579 des disques de labour présentant des encoches à leur périphérie. De tels disques ne donnent cependant pas entière satisfaction car d'une part ils ont tendance à recueillir et à accrocher les végétaux poussant à la surface du terrain labouré et d'autre part la surface du terrain labouré ne se présente pas toujours avec la structure que l'on souhaite.

La demande EP-A-0 162 197 décrit une charrue à disques entraînés en rotation, dont la périphérie présente des lobes convexes réunis entre eux par des parties radiales de manière à réaliser des découpes dans le sol.

Il existe un besoin pour améliorer la fragmentation de la terre lors du labour.

Le document US 323343 décrit, un disque de labour destiné à être monté sur un engin de labour et à être entraîné en rotation lors du déplacement de l'engin, comportant une périphérie présentant une succession de lobes convexes arrondis sur toute leur périphérie, le disque présentant une forme général concave, son centre étant décalé d'un même côté de l'ensemble de sa périphérie. Selon l'invention chaque lobe présente en outre une concavité supplémentaire modifiant la concavité générale du disque.

Grâce à la concavité supplémentaire des disques de labour, on obtient une meilleure fragmentation des morceaux de terre, les morceaux de terre obtenus étant de taille plus petite qu'avec les disques connus, notamment d'une taille de l'ordre de la dimension de la concavité supplémentaire de chacun des lobes du disque.

En outre, la forme polylobée des disques permet d'obtenir une ligne d'attaque du sol sinueuse, qui foisonne le sol avant de le retourner, limitant ainsi la formation de mottes. On obtient également un meilleur retournement du sol, la terre labourée étant mieux rabattue. Le sous-sol reste rugueux.

Il en résulte encore un meilleur dégagement des végétaux poussant à la surface du terrain labouré et donc une meilleure pénétration et une rotation plus facile des disques qui travaillent ainsi dans de meilleures conditions.

Chaque lobe peut présenter un creux ménagé dans une partie centrale du lobe, entre le centre du disque et la périphérie du lobe. Chaque lobe peut présenter un seul creux.

Le disque peut, en variante ou additionnellement, comporter des plis sensiblement radiaux disposés entre les lobes ou sur un lobe.

Au moins un pli, voire tous les plis d'un disque, peut relier d'une part un point de la périphérie du disque, par exemple le centre d'un lobe et/ou le point de séparation entre deux lobes, à d'autre part un point d'une partie centrale du disque, par exemple le centre du disque et/ou un point d'un cercle centré sur le centre du disque petit par rapport à la périphérie du disque.

Dans le cas où le pli relie un point de la périphérie du disque à un point d'un cercle centré sur le centre du disque petit par rapport à la périphérie du disque, mais pas le centre du disque lui-même, c'est-à-dire dans le cas où les plis du disque sont dit « dérayonnés », il peut être nécessaire de privilégier un sens de rotation en fonction de la nature du sol, à savoir sec ou humide.

Les plis peuvent être à angles francs ou être légèrement arrondis, le disque étant respectivement légèrement en zigzag ou ondulé lorsque observé en section transversale, selon le cas.

La concavité supplémentaire apportée par chaque lobe à la concavité générale du disque peut être d'au moins 10 %, voire d'au moins 20 %.

Le disque peut comporter une partie centrale sensiblement plane.

Le disque peut être percé en son centre par un orifice central pour sa fixation à un arbre, de forme générale par exemple polygonale, par exemple carrée ou circulaire.

Le disque peut comporter un nombre pair de lobe. Un nombre pair de lobes peut être préféré dans le cas où le disque est destiné à être utilisé sur un axe transversal à une direction de déplacement de l'engin de labour.

Le disque peut comporter un nombre impair de lobes. Un nombre impair de lobes peut être préféré dans le cas où le disque est destiné à être installé sur un axe oblique par rapport à une direction de déplacement de l'engin de labour.

L'ensemble des lobes d'un disque peut être identique. Les lobes d'un disque peuvent être équirépartis sur la périphérie du disque.

L'invention a encore pour objet un engin de labour comportant au moins un train équipé d'au moins un disque selon l'une quelconque des revendications précédentes. La face convexe des disques peut être dirigée dans la direction de déplacement de l'engin. En variante, la face concave des disques peut être dirigée dans la direction de déplacement de l'engin.

Le train de disques peut comporter un ou plusieurs disques conformes à l'invention, ainsi que des disques de forme différente, par exemple des disques à fléaux, ou en variante tous les disques peuvent être conformes à l'invention. Le contour d'au moins un des disques de l'engin peut être quelconque. Au moins l'un des disques peut être lobé, c'est-à-dire comporter un périmètre défini par une succession d'arcs de cercle convexe, ou encore être un disque présentant à sa périphérie une série d'entailles en arc de cercle concave, ou encore un disque convexe dont les bords présentent des nervures ou ondulations qui assurent un ameublissement du sol supplémentaire, ou encore un disque dont la périphérie est circulaire.

Le train de disques peut s'étendre selon un axe oblique par rapport à la direction de déplacement de l'engin. Une telle configuration peut permettre de fragmenter le sol au fur et à mesure de la progression de l'engin et de le déplacer latéralement.

L'engin de labour peut comporter un ou plusieurs trains de disques successifs.

Selon un exemple de réalisation de l'invention, le train de disques situé à l'arrière de l'engin peut être basculé autour d'un axe vertical, soit dans une position où les disques présentent leur face convexe dans la direction de déplacement de l'engin, qui peut alors fonctionner notamment comme semoir pour effectuer une préparation du sol telle qu'un hersage ou un appui, soit dans une position où les disques présentent leur face concave en direction de l'avancement de l'engin, ce qui leur permet d'effectuer un labour traditionnel.

L'engin peut comporter deux trains de disques disposés symétriquement par rapport à l'axe de l'engin, qui peuvent être basculés simultanément et qui permettent d'équilibrer les forces latérales qui s'exercent sur l'engin. Il peut être avantageux de disposer des paires de trains identiques, symétriquement, de part et d'autre de l'axe central de l'engin de labour, ce qui peut permettre de compenser des forces latérales qui auraient tendance à déporter latéralement l'engin s'il ne comportait que les trains de disques inclinés dans la même direction.

L'engin peut comporter en amont du train de disques un dispositif pour ameublir le sol, comportant par exemple un ou plusieurs trains de disques parallèle(s), la face concave des disques du train de disques d'ameublissement étant dirigée dans la direction de déplacement de l'engin.

Dans un exemple de réalisation, le sol peut être ameubli au devant du train de disques selon l'invention par d'autres moyens tels que des socs, des griffes ou autres scarificateurs.

L'engin peut comporter en outre un semoir configuré pour déposer des graines sur le sol, notamment un semoir à la volée qui dépose les graines sur le sol en amont du train de disque, ou en variante un semoir en ligne qui dépose les graines sur le sol entre les disques du train de disques ou à l'arrière du train de disques, le recouvrement des graines s'effectuant alors au moyen de divers types de herses.

Les graines peuvent être déposées sur le sol par tout dispositif de semailles approprié à la nature des graines. Les graines peuvent être par exemple semées à la volée en avant ou en amont du dispositif qui ameublit le sol.

L'action de la partie inférieure convexe des disques a pour effet de repousser progressivement les graines sur le côté de leur convexité pour les placer sensiblement selon des lignes parallèles, tout en tassant légèrement le sol pour les enfouir.

Selon un autre exemple de réalisation de l'invention, on peut utiliser un semoir traditionnel en ligne qui dépose les graines entre les disques du train de disques selon l'invention et à l'avant de celui-ci, ce qui assure une bonne mise en place des graines même à faible profondeur. On peut ainsi modifier la profondeur à laquelle les graines sont déposées dans le sol, en faisant varier la distance entre l'axe des disques et le point où les graines sont déposées sur le sol.

Dans un exemple de réalisation de l'invention, on peut disposer d'un engin comportant un ou plusieurs trains de disques parallèles qui peuvent dans un sens de marche être utilisés comme engin de labour et qui en sens inverse peuvent être utilisés comme semoir pour enfouir des graines déposées à la volée ou en ligne.

Les trains de disques convexes selon l'invention peuvent être montés sur un axe commun en étant alors coaxiaux. Ils peuvent également être chacun supportés par un bras qui permet de régler à la fois l'inclinaison de chaque disque par rapport à la verticale et par rapport à la direction d'avancement. Tous les bras sont dans ce cas solidaires d'une même poutre pour constituer le train.

Les disques d'un même train peuvent être fixés en hélice sur leur axe commun, chaque disque étant décalé par exemple d'un quart ou d'un huitième de tour par rapport à son voisin, de manière à améliorer encore l'homogénéité du labourage.

Dans le cas où l'engin comporte plusieurs trains, les disques de différents trains peuvent ne pas avoir le même nombre de lobes et/ou leur montage en hélice sur l'axe des trains peut ne pas se faire avec le même pas. Cela peut permettre d'éviter avec une grande efficacité la formation d'une "semelle", c'est-à-dire d'une interface plane séparant la terre labourée de celle qui ne l'est pas, ce qui est essentiel pour maintenir la terre en bon état de culture.

Les disques peuvent être réalisés en polycarbonate, en matériau connu sous le nom de téflon^{®}, ou tout autre matériau élastique, notamment lorsqu'ils sont destinés aux appareils de semis.

L'invention sera mieux comprise à la lecture de la description détaillée qui va suivre, d'exemples de réalisation non limitatifs de l'invention, et à l'examen du dessin annexé sur lequel:
- la figure 1 est une vue en élévation d'un disque de labour conforme à l'invention,
- la figure 2 est une vue en coupe selon II - II du disque de la figure 1,
- les figures 3 et 3a sont des vues en coupe, analogues à la figure 2, de variantes de réalisation,
- la figure 4 est une vue analogue à la figure 1 d'une variante de réalisation,
- la figure 5 est une vue de côté selon la flèche V du disque de la figure 4,
- les figures 6 et 7 sont des vues analogues à la figure 1 de variantes de réalisation,
- la figure 8 présente un train de disques selon l'invention,
- la figure 9 est une vue schématique de dessus d'un engin selon l'invention,
- la figure 10 est un mode de réalisation d'un engin selon l'invention dans lequel la terre est ameublie en amont du semoir par un train de disque travaillant de manière conventionnelle, et
- la figure 11 est un mode de réalisation de l'invention comportant des trains de disques disposés symétriquement de part et d'autre de l'axe de l'engin, les trains de disques arrière pouvant être basculés de manière à présenter dans la direction d'avancement, soit la face convexe des disques pour utiliser l'engin semoir, soit leur face concave pour utiliser le train de disques de manière traditionnelle comme engin de labour.

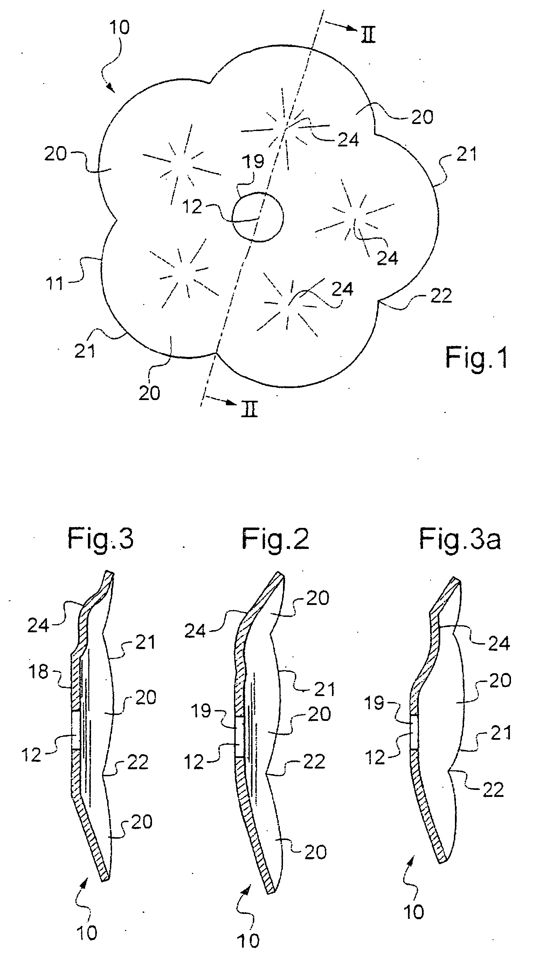

On a illustré à la figure 1 un disque de labour 10 conforme à l'invention, comportant dans sa partie centrale 18 un orifice 19 permettant son montage de manière connue sur un axe solidaire d'un châssis d'un engin de labour, telle qu'une charrue, axe autour duquel il peut tourner librement.

Le disque de labour 10 comporte une périphérie 11 présentant une succession de lobes 20 convexes arrondis sur toute leur périphérie 21, et se rejoignant suivant des angles francs 22.

Dans l'exemple décrit, on prévoit un nombre impair de lobes 20, à savoir cinq, par exemple compris entre 3 et 10, de manière à permettre un meilleur foisonnement du sol en évitant une attaque régulière de ce dernier. Cependant, on ne sort pas du cadre de la présente invention si un disque de labour conforme à l'invention comporte un nombre pair de lobes, par exemple six lobes.

En outre, les lobes se rejoignent dans l'exemple décrit selon des angles francs, mais on ne sort pas du cadre de la présente invention s'il en est autrement, et si les lobes se rejoignent par exemple selon une partie concave.

Le disque de labour 10 présente une forme générale concave, son centre 12 étant décalé d'un même côté de l'ensemble de sa périphérie 11, comme illustré en coupe sur la figure 2.

En outre, chaque lobe 20 présente une concavité supplémentaire accentuant la concavité générale du disque, qui se présente dans l'exemple des figures 1 et 2 sous la forme d'un creux 24 disposé dans une partie centrale de chaque lobe 20, chaque lobe comportant un creux 24 unique.

Dans la variante de réalisation illustrée à la figure 3, le disque 10 comporte une partie centrale 18 plane.

Dans la variante de réalisation illustrée à la figure 3a, le creux 24 est ménagé en direction de la périphérie 11 du disque 10, de sorte que sa concavité est opposée à la concavité générale du disque. Une telle configuration peut permettre d'améliorer l'éclatement des copeaux de terre durs et secs.

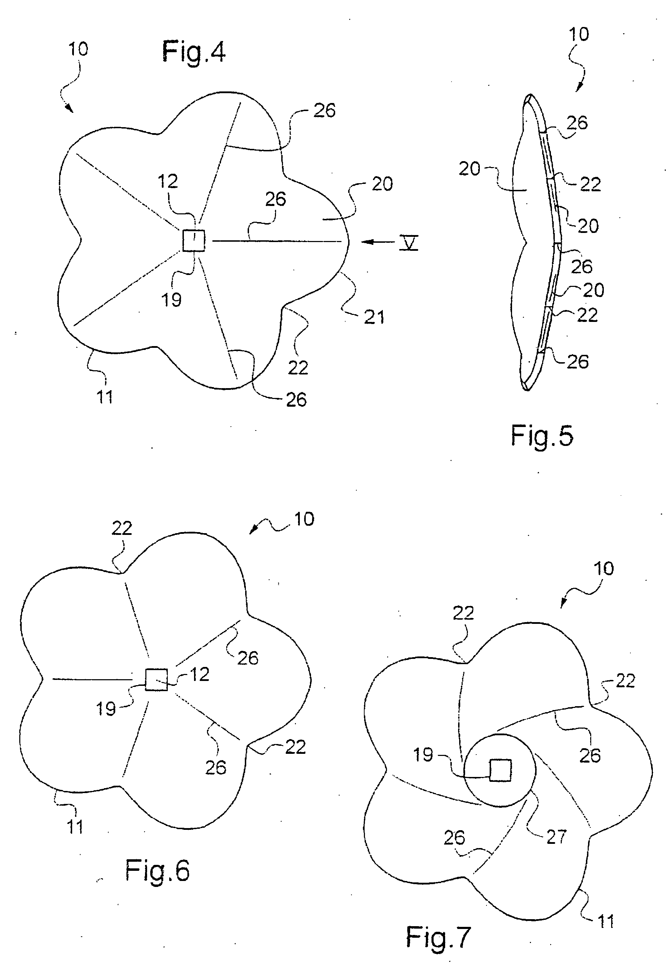

Dans des variantes de réalisations illustrées aux figures 4 à 7, la concavité supplémentaire du disque peut être apportée par des plis sensiblement radiaux 26 disposés entre les lobes ou sur un lobe 20.

Dans l'exemple illustré aux figures 4 et 5, chaque lobe 20 comporte un pli 26 reliant d'une part le centre de la périphérie 21 d'un lobe 20 à d'autre part le centre 12 du disque.

Dans la variante de réalisation illustrée à la figure 6, chaque pli 26 est disposé entre deux lobes 20 successifs, un pli 26 reliant le point de séparation 22 entre deux lobes au centre 12 du disque.

Enfin, dans l'exemple de réalisation de la figure 7, chaque pli 26 relie un point de la périphérie 11 du disque à un point d'un cercle 27 centré sur le centre 12 du disque et petit par rapport à la périphérie 11 du disque, mais pas le centre du disque lui-même, c'est-à-dire que les plis 26 du disque sont dérayonnés.

Les disques décrits ci-dessus peuvent être réalisés par exemple par formage ou par moulage, et avoir un diamètre compris entre 47 cm et 150 cm par exemple.

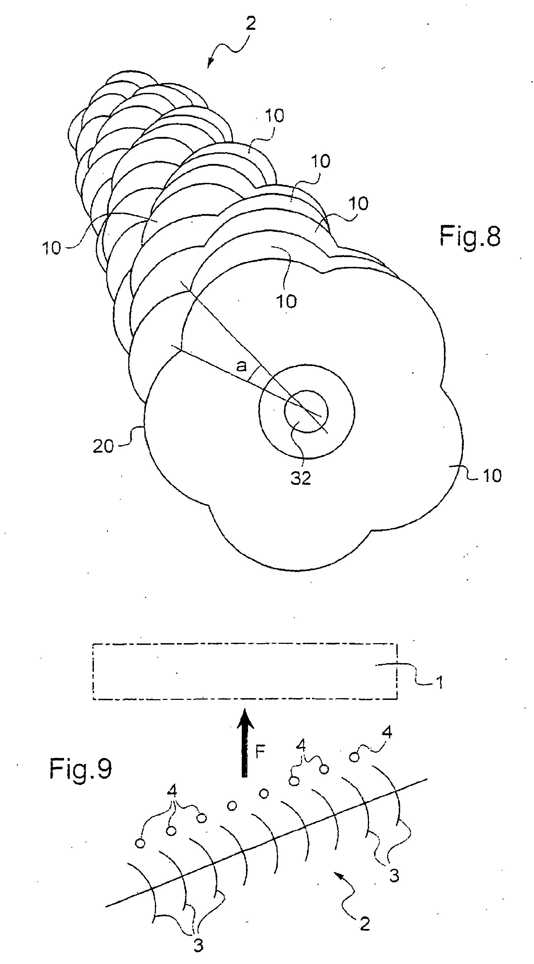

On voit sur la figure 8 un ensemble de disques 10 montés solidaires d'un arbre de rotation 32, pour former un train de disques 2.

L'arbre 32 est monté libre en rotation sur un châssis non représenté d'un engin de labour, par exemple une charrue, de manière à être inclinée par rapport à la direction d'avancement de celui-ci.

Deux disques adjacents sont dans l'exemple décrit décalés d'un angle a qui, dans le cas illustré, est sensiblement égal à 18°.

Un tel décalage de 18°, associé au fait que les disques comprennent dans l'exemple décrit cinq lobes, entrainent que la position des disques sur l'axe 32 se retrouve identique à elle-même tout les quatre disques, deux disques séparés par trois disques ayant le même décalage angulaire.

Par conséquent, tous les 18° de rotation de l'ensemble des disques, un disque sur quatre attaque le terrain, rendant ainsi le fonctionnement de l'engin pratiquement sans vibrations.

Bien entendu, l'angle a pourrait avoir une valeur différente sans que l'on sorte du cadre de la présente invention.

Les disques 10 conformes à l'invention rassemblés sur un train de disques 2 forment un engin de labour, la face convexe des disques étant dirigée dans la direction de déplacement de l'engin, comme illustré sur la figure 9.

Le train 2 peut être précédé dans la direction d'avancement de l'engin par un engin 1 qui permet d'ameublir le sol. Cet engin 1 peut être constitué par exemple par des charrues traditionnelles, un ensemble de griffes ou un ou plusieurs trains de disques de labour.

Cet ameublissement du sol peut être réalisé soit antérieurement au passage de l'engin selon l'invention, soit avec un engin qui est physiquement relié à l'engin selon l'invention.

Dans ce dernier cas, le train de disques 2 comportant les disques selon l'invention est disposé à l'arrière de l'engin 1 qui se déplace dans le sens de la flèche F.

On peut disposer en outre à l'avant du train de disques 2 un semoir qui dépose des graines 4 pour réaliser une semaille en ligne. Les graines sont avantageusement déposées vers le milieu de la distance qui sépare les extrémités avant de deux disques voisins. Dans une variante, les graines peuvent être semées à la volée devant le train de disques 2 selon l'invention. Ainsi, les disques convexes ne travaillent que sur une profondeur suffisante pour enfouir convenablement les graines. Grâce à la convexité des disques, les graines sont progressivement enfouies et tassées dans le sol en étant repoussées par la partie inférieure bombée des disques. Il en résulte que même si les graines ont été semées à la volée, l'engin selon l'invention tend à les replacer selon des lignes grâce à l'action de la portée inférieure des disques convexes.

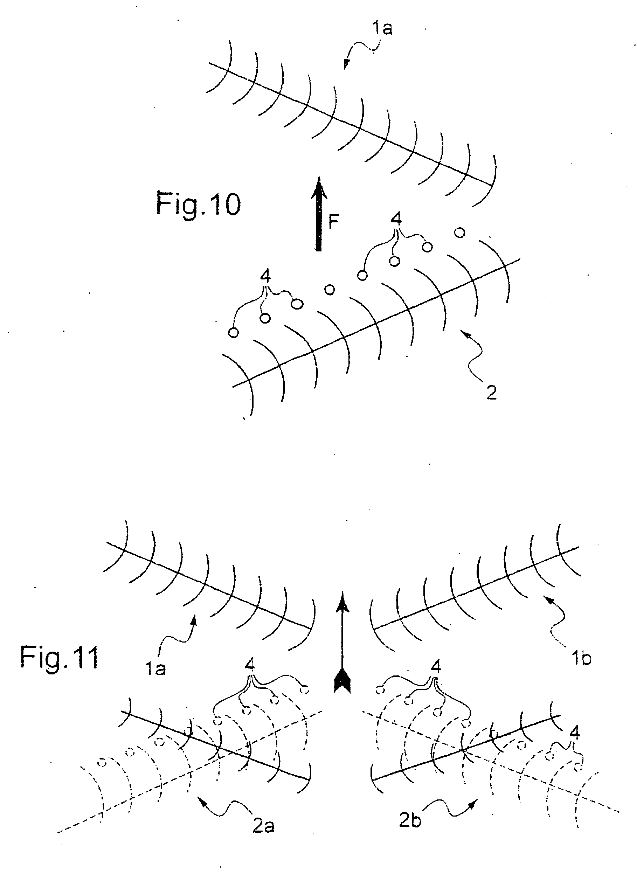

La figure 10 représente schématiquement un engin selon l'invention dans lequel on a placé pour ameublir le sol un train de disques conventionnel en avant du train de disques 2 selon l'invention, qui est associé à un semoir en ligne 4.

Dans ce train conventionnel, les disques présentent leur face avant dans la direction d'avancement de l'engin.

Enfin, dans une autre variante de réalisation illustrée à la figure 11, l'engin comporte disposés symétriquement par rapport à l'axe de l'engin, deux trains de disques 1a et 1b qui présentent la concavité des disques en direction de l'avancement, et à l'arrière deux train de disques 2a et 2b qui sont susceptibles de pivoter autour d'un axe vertical entre une première position représentée en trait plein dans laquelle les trains de disques 2a et 2b présentent la concavité des disques dans le sens de l'avancement de l'engin, qui a pour effet de jouer le rôle d'un engin de labour habituel, et une deuxième position représentée sur la figure 11 en traits interrompus, dans laquelle les trains de disques 2a et 2b présente leur convexité en direction de l'avancement de l'engin, ce qui permet de les associer à un semoir en ligne 4 qui est représenté en ligne interrompue sur la figure 3, mais qui pourrait être un semoir à la volée.

Cette disposition symétrique de l'engin de la figure 11 permet d'équilibrer les forces latérales exercées par les trains de disques lorsque ces derniers ont leurs axes parallèles.

En outre, le train de disques 2 de l'invention peut comporter uniquement des disques conformes à l'invention, ou des disques d'une autre forme, par exemple un ou plusieurs disques de périphérie circulaire, ou un ou plusieurs disques tels que des disques gaufrés ou des disques à fléaux.

Bien entendu, l'invention n'est pas limitée aux exemples de réalisation qui viennent d'être décrits.

En particulier, la concavité supplémentaire peut être non traversante, comme dans les modes de réalisation décrits en détail ci-dessus, ou traversante. Elle peut en particulier comprendre un orifice débouchant sur chacune des grandes faces du disque, la section de cet orifice pouvant être quelconque, en particulier circulaire, ovale, triangulaire ou polygonale.

La plus grande dimension de la section transversale d'un orifice traversant est de préférence supérieure à 10 % et/ou inférieure 25 % de la plus grande dimension du disque. Par exemple, pour un disque de 50 cm de diamètre des orifices traversants de 5 à 12,5 cm peuvent être ménagés.

## Revendications

1. Disque de labour (10) destiné à être monté sur un engin de labour et à être entraîné en rotation lors du déplacement de l'engin, comportant une périphérie (11) présentant une succession de lobes (20) convexes arrondis sur toute leur périphérie (21), le disque présentant une forme générale concave, son centre (12) étant décalé d'un même côté de l'ensemble de sa périphérie (11), **caractérisé en ce que**
chaque lobe (20) présente en outre une concavité supplémentaire (24, 26) modifiant la concavité générale du disque, ou une concavité supplémentaire présentant un orifice traversant ménagé dans une partie centrale du lobe, entre le centre du disque et la périphérie du lobe.

2. Disque selon la revendication 1, comportant des plis (26) sensiblement radiaux disposés entre les lobes ou sur un lobe.

3. Disque selon la revendication précédente, dans lequel au moins un pli, voire tous les plis d'un disque, relie d'une part un point de la périphérie du disque (11), à d'autre part un point d'une partie centrale du disque.

4. Disque selon l'une quelconque des revendications précédentes, dans lequel la concavité supplémentaire apportée par chaque lobe à la concavité générale du disque est d'au moins 10 %, voire d'au moins 20 %.

5. Disque selon l'une quelconque des revendications précédentes, comportant une partie centrale (18) sensiblement plane.

6. Disque selon l'une quelconque des revendications précédentes, étant percé en son centre par un orifice central (19) pour sa fixation à un arbre, de forme générale notamment polygonale, par exemple carrée ou circulaire.

7. Disque selon l'une quelconque des revendications précédentes, comportant un nombre pair de lobes.

8. Disque selon l'une quelconque des revendications 1 à 6, comportant un nombre impair de lobes.

9. Engin de labour comportant au moins un train (2) équipé d'au moins un disque (10) selon l'une quelconque des revendications précédentes.

10. Engin de labour selon la revendication précédente, le train de disques (2) s'étendant selon un axe oblique par rapport à la direction de déplacement de l'engin.

11. Engin selon l'une des revendications 9 ou 10, comportant deux trains de disques disposés symétriquement par rapport à l'axe de l'engin.

12. Engin de labour selon l'une queiconque des revendication 10 à 12. comportant en outre un semoir configuré pour déposer des graines sur le sol.

13. Engin selon l'une quelconque des revendications 9 à 12, comportant en amont du train (2) de disques un dispositif (1) pour ameublir le sol, comportant notamment un ou plusieurs trains de disques parallèle(s), la face concave des disques du train de disques d'ameublissement étant dirigée dans la direction de déplacement de l'engin.

## Claims

1. ploughing disc (10) intended to be mounted on a ploughing implement and to be turned as the implement moves along, comprising a periphery (11) that has a succession of convex lobes (20) that are rounded on their entire periphery (21), the disc having a concave overall shape, its centre (12) being offset from its periphery (11) on one and the same side of the assembly, **characterized in that**
each lobe (20) further has an additional concavity (24, 26) that alters the overall concavity of the disc, or an additional concavity that has a through-orifice formed in a central part of the lobe, between the centre of the disc and the periphery of the lobe.

2. Disc according to Claim 1, comprising substantially radial creases (26) positioned between the lobes or on a lobe.

3. Disc according to the preceding claim, in which at least one crease, or even all the creases of a disc, connects, on the one hand, a point on the periphery of the disc (11) to, on the other hand, a point on a central part of the disc.

4. Disc according to any one of the preceding claims, in which the additional concavity afforded by each lobe to the overall concavity of the disc is at least 10% or even at least 20%.

5. Disc according to any one of the preceding claims, comprising a substantially planar central part (18).

6. Disc according to any one of the preceding claims, which is pierced at its centre by a central orifice (19) for attaching it to a shaft, the orifice being notably of polygonal overall shape, for example square or circular.

7. Disc according to any one of the preceding claims, comprising an even number of lobes.

8. Disc according to any one of Claims 1 to 6, comprising an odd number of lobes.

9. Ploughing implement comprising at least one set (2) fitted with at least one disc (10) according to any one of the preceding claims.

10. Ploughing implement according to the preceding claim, the set of discs (2) extending along an axis that is oblique to the direction of travel of the implement.

11. Implement according to one of Claims 9 and 10, comprising two sets of discs arranged asymmetrically with respect to the axis of the implement.

12. Ploughing implement according to any one of claims 10 to 12, further comprising a seed drill configured to place seeds on the ground.

13. Implement according to any one of Claims 9 to 12, comprising, ahead of the set (2) of discs, a device (1) for loosening the soil, notably comprising one or more sets of parallel discs, the concave face of the discs of the set of loosening discs being directed in the direction of travel of the implement.

## Patentansprüche

1. Arbeitsscheibe (10), die dazu bestimmt ist, an einer Bodenbearbeitungsmaschine montiert zu werden und bei der Fortbewegung der Maschine zur Drehung angetrieben zu werden, mit einem Umfangsrand (11), der eine Folge von konvexen Lappen (20) bildet, die auf ihrem gesamten Rand (21) abgerundet sind, wobei die Scheibe eine allgemein konkave Form hat, wobei ihre Mitte (12) von einer gleichen Seite der Gesamtheit des Umfangsrandes (11) versetzt ist, **dadurch gekennzeichnet, dass** jeder Lappen (20) außerdem eine zusätzliche Höhlung (24, 26) bildet, die die allgemeine Höhlung der Scheibe modifiziert, oder eine zusätzliche Höhlung, die eine durchgehende Öffnung bildet, die in einem zentralen Teil des Lappens zwischen der Mitte der Scheibe und dem Rand des Lappens ausgebildet ist.

2. Scheibe nach Anspruch 1, mit im wesentlichen radialen Knicken, die zwischen den Lappen oder auf einem Lappen angeordnet sind.

3. Scheibe nach dem vorstehenden Anspruch, bei der wenigstens ein Knick oder alle die Knicke einer Scheibe einerseits mit einem Punkt des Umfangsrandes (11) der Scheibe verbunden sind und andererseits mit einem Punkt eines zentralen Teils der Scheibe.

4. Scheibe nach einem der vorstehenden Ansprüche, bei der die zusätzliche Konkavität, die jeder Lappen zu der gesamten Konkavität der Scheibe beiträgt, wenigstens 10%, insbesondere wenigstens 20% beträgt.

5. Scheibe nach einem der vorstehenden Ansprüche, mit einem im wesentlichen ebenen zentralen Teil (18).

6. Scheibe nach einem der vorstehenden Ansprüche, die in ihrer Mitte von einer zentralen Öffnung (19) von allgemein polygonaler Form, beispielsweise quadratisch oder kreisförmig, für ihre Befestigung an einer Welle durchsetzt ist.

7. Scheibe nach einem der vorstehenden Ansprüche, mit einer geraden Anzahl von Lappen.

8. Scheibe nach einem der Ansprüche 1 bis 6, mit einer ungeraden Anzahl von Lappen.

9. Bodenbearbeitungsmaschine mit wenigstens einer Scheibengruppe (2), die mit wenigstens einer Scheibe (10) nach einem der vorstehenden Ansprüche ausgerüstet ist.

10. Bodenbearbeitungsmaschine nach dem vorstehenden Anspruch, bei der sich die Scheibengruppe (2) entlang einer Achse erstreckt, die schräg in Bezug auf die Fortbewegungsrichtung der Maschine verläuft.

11. Bodenbearbeitungsmaschine nach Anspruch 9 oder 10, mit zwei Scheibensätzen, die symmetrisch in Bezug auf die Achse der Maschine angeordnet sind.

12. Bodenbearbeitungsmaschine nach einem der Ansprüche 10 bis 12, mit einer Drillvorrichtung, die dazu ausgebildet ist, Körner in den Boden abzulegen.

13. Bodenbearbeitungsmaschine nach einem der Ansprüche 9 bis 12, die stromaufwärts des Scheibensatzes (2) eine Einrichtung (1) Zum Auflockern des Bodens ausweist, insbesondere mit einem oder mehreren parallelen Scheibensätzen, wobei die konkave Seite der Scheiben des Scheibensatzes zur Auflockerung in Fortbewegungsrichtung der Maschine gerichtet ist.
